# EUROPÄISCHE PATENTSCHRIFT

(11) **EP 0 952 294 B1**
(45) Veröffentlichungstag und Bekanntmachung des Hinweises auf die Patenterteilung: **05.04.2006**
(21) Anmeldenummer: 99107862.7
(22) Anmeldetag: 21.04.1999
(51) Int. Cl.: E06B 1/60, F16B 13/00

(54) **Befestigungsanordnung für Fensterrahmen**
Fixing for window frames
Fixation pour cadres de fenêtres

(30) Priorität: 22.04.1998 DE 19817903
(43) Veröffentlichungstag der Anmeldung: 27.10.1999
(73) Patentinhaber: Adolf Würth GmbH & Co. KG, 74653 Künzelsau (DE)
(72) Erfinder: Steck, Otto, 74670 Forchtenberg (DE)
(74) Vertreter: Patentanwälte Ruff, Wilhelm, Beier, Dauster & Partner

(56) Entgegenhaltungen:
- EP-A- 0 171 745
- EP-A- 0 400 535
- DE-A- 3 740 460

## Beschreibung

Die Erfindung geht aus von einem Dübel, mit dessen Hilfe die Zargen von Fenstern, Türen oder dergleichen an Mauerwerk befestigt werden können. Bei den bekannten Dübeln wird der Dübel üblicherweise durch eine Durchgangsbohrung der Zarge hindurch in ein Loch im Mauerwerk gesteckt und dann mit Hilfe einer Schraube aufgeweitet. Bei dieser Art von Befestigung mit Dübeln kann auf den Fensterrahmen eine spannung ausgeübt werden, so daß das montierte Fenster nicht spannungsfrei ist.

Ebenfalls bekannt ist die Befestigung mit Hilfe von Fensterbauschrauben, die dann aber beispielsweise direkt in das Mauerwerk oder den Beton eingeschraubt werden.

Es ist bereits ein Befestigungselement bestehend aus einer Schraube und einem Dübel bekannt (EP 400535), bei dem der Dübel aus einer Dübelhülse und einem Verankerungssdübel aufgebaut ist. Die Dübelhülse weist umlaufende Rippen und einen ihre Aufweitung ermöglichenden Längsschlitz auf.

Weiterhin ist ein aus einem Kunststoffspreizdübel und einer Befestigungsschraube bestehender Befestigungssatz bekannt (EP 171745). Hier weist die zum Eingriff in das zu befestigende Bauteil bestimmte Dübelhülse äußere umlaufende Rippen auf.

Der Erfindung liegt die Aufgabe zugrunde, eine spannungsfreie Montage von Fenstern auf Abstand mit Hilfe von Dübeln zu ermöglichen.

Zur Lösung dieser Aufgabe schlägt die Erfindung eine Befestigungsanordnung mit den Merkmalen des Anspruchs 1 vor. Weiterbildungen der Erfindung sind Gegenstand der abhängigen

Ansprüche, deren Wortlaut ebenso wie der Wortlaut der Zusammenfassung durch Bezugnahme zum Inhalt der Beschreibung gemacht wird.

Die Montage der Fenster geschieht wie bisher. Die Zarge wird ausgerichtet und der Dübel durch eine Durchgangsbohrung der Zarge in das Loch im Mauerwerk oder Untergrund gesteckt. Die Schraube wird in den Dübel eingesteckt und eingeschraubt. Das Einschrauben führt zum Vorschub der Schraube und zum gleichzeitigen Aufweiten des Spreizbereichs des Dübels. Sobald die Schraube soweit in die Dübelhülse eingeschraubt ist, daß ihre Gewindeeinrichtung in Eingriff mit dieser gelangt, wird zwischen der Schraube und dem Dübel ein Gewindeeingriff hergestellt, der beim Festziehen dazu führt, daß die Schraube keine Stauchung der Dübelhülse durchführen kann. Da das Fenster an der Dübelhülse festgelegt wird, übt die Schraube also keine Kraft auf die Zarge in Richtung ihrer eigenen Längsachse aus, so daß das Fenster spannungsfrei bleibt.

Erfindungsgemäß kann vorgesehen sein, daß die Dübelhülse ein mit der Gewindeeinrichtung der Schraube zusammenwirkendes Gewinde aufweist. Selbst wenn eine nicht exakte Ausrichtung zwischen der Gewindeeinrichtung der Schraube und dem Gewinde der Hülse vorhanden ist, wird dennoch ein Gewindeeingriff hergestellt, der die gewünschte Spannungsfreiheit der Befestigung bewirkt.

Bei der Gewindeeinrichtung an der Schraube kann es sich um ein beispielsweise nur teilweise ausgebildetes Gewinde handeln, insbesondere aber um ein Gewinde, dessen Gewindegänge vollständig ausgebildet sind, das aber nicht die Form eines üblichen genormten Gewindes aufweist. Beispielsweise können die Gewindeflanken flacher sein als bei einem üblichen Gewinde. Das Gewinde ist insbesondere so ausgebildet daß es beim Einschrauben in die Dübelhülse in dieser ein Gewinde bildet, insbesondere schneidet oder formt. Dies bedeutet, daß ein Dübel verwendet werden kann, der nicht an die neue Art der Befestigung angepaßt zu werden braucht, sondern ein handelsüblicher Dübel. Dabei kann es sich auch um einen Dübel mit einer bauaufsichtlichen Zulassung handeln.

Erfindungsgemäß ist vorgesehen, daß sich das in der Dübelhülse gebildete Gewinde zur Außenseite der Dübelhülse hin durchformt, so daß also die Dübelhülse in diesem Bereich sich etwas nach außen aufweitet. Dies kann zu einer verbesserten Festlegung der Zarge an dem Teil der Dübelhülse führen.

Erfindungsgemäß kann vorgesehen sein, daß die Dübelhülse einen Dübelkopf zur Anlage an der der Wand abgewandten Seite der Zarge aufweist.

Es kann vorgesehen sein, daß der Schraubenkopf radial über den Schaft vorsteht.

Das Einformen oder Einschneiden des Gewindes ist bei den verschiedensten Materialien möglich, auch bei einem aus Blech bestehenden Dübel. Besonders günstig ist es jedoch, wenn es sich bei dem Dübel um einen aus Kunststoff hergestellten Dübel handelt.

Erfindungsgemäß kann an der Schraube zwischen den beiden Gewinden ein gewindefreier Abschnitt ausgebildet sein.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Seitenansicht eines für die Befestigungsanordnung nach der Erfindung verwendbaren Dübels;
- Fig. 2: einen Schnitt durch die Anbringung einer Zarge vor einem Mauerwerk mit Hilfe des Dübels;
- Fig. 3: eine unterbrochene Seitenansicht einer Schraube, mit der die Befestigung nach der Erfindung durchgeführt werden kann.

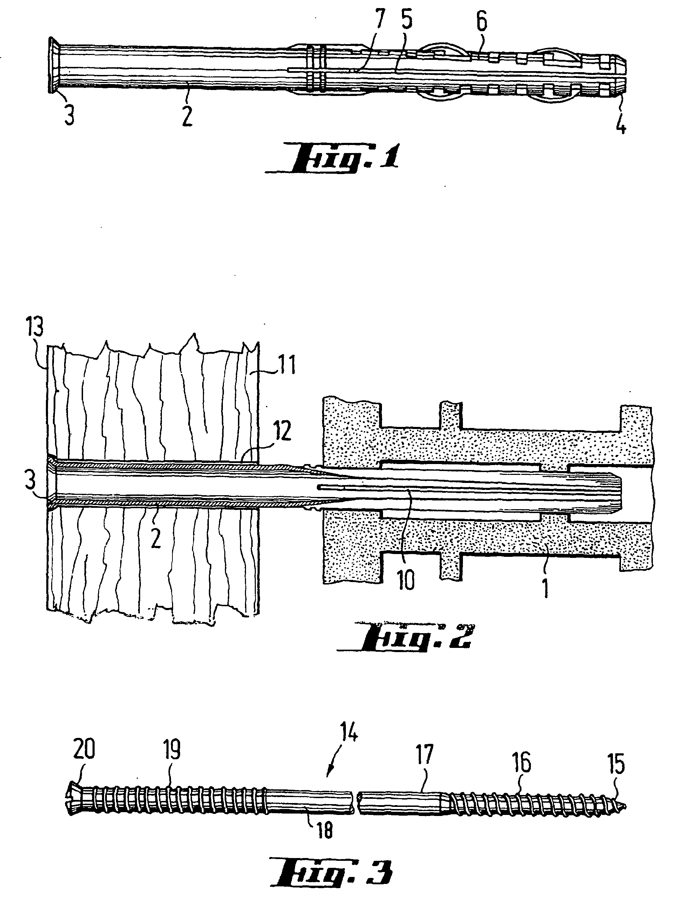

Fig. 1 zeigt eine Seitenansicht eines aus Kunststoff bestehenden Rahmendübels, der zur Befestigung von Fensterzargen bestimmt ist und einen Teil der Erfindung bildet. Der Dübel enthält eine Dübelhülse 2, wo er einfach als zylindrisches Rohr ausgebildet ist. Am äußeren Ende ist ein Dübelkopf 3 in Form einer kragenartigen Erweiterung vorhanden, deren Innenseite einem Schraubenkopf entspricht.

Von dem gegenüberliegenden, in das Innere des Bohrlochs gerichteten freien Ende 4 gehen zwei einander diametral gegenüberliegende Längsechlitze 5 aus. Diese definieren dadurch im dargestellten Ausführungsbeispiel zwei Spreizschenkel 6, die an dem Ende 7 der Längsschlitze 5 in die Dübelhülse 2 übergehen.

An der Innenseite der Spreizschenkel 6 sind in Längsrichtung verlaufende Rippen 10 angeformt, die etwas in die Längsöffnung des Dübels hineinragen. Diese Rippen 10 und die Spreizschenkel 6 konvergieren in ihrem Innenraum in Richtung auf das freie Ende 4 des Dübels. Beim Einschrauben der Schraube, siehe Fig. 3, formt sich deren Gewinde Gewindegänge in den Rippen 10, so daß die Schraube sich vorwärts bewegt und dabei gleichzeitig die Spreizschenkel 6 nach außen beaufschlagt.

In Fig. 2 ist zu sehen, wie der in Fig. 1 dargestellte Dübel dazu verwendet wird, eine Zarge 11 mit Abstand vor dem Mauerwerk 1 zu befestigen. Die Zarge 11 enthält eine Durchgangsbohrung 12, durch die der Dübel hindurch gesteckt werden kann. Die Zarge 11 wird zunächst vor dem Mauerwerk 1 ausgerichtet und dort vorübergehend fixiert. Dann wird durch die Durchgangsbohrung 12 in ein bereits vorhandenes Loch der Dübel gesteckt, bis er mit seinem Dübelkopf 3 an der dem Mauerwerk 1 abgewandten Seite 13 der Zarge 11 anliegt. Jetzt wird die in Fig. 3 dargestellte Schraube in die Dübelhülse eingesteckt und mit einem Schraubendreher eingeschraubt.

Die Schraube enthält im Bereich ihres vorderen Endes eine Schraubenspitze 15, von der aus sich ein erstes Gewinde 16 den Schraubenschaft 17 entlang erstreckt. An das erste Gewinde 16 schließt sich ein gewindefreier Schaftabschnitt 18 an, der dann wiederum in einen Gewindeabschnitt 19 übergeht. Der Gewindeabschnitt 19 reicht bis an den Schraubenkopf 20 heran. Bei dem Schraubenkopf 20 handelt es sich beispielsweise um einen Senkkopf, dessen Form der Form des Dübelkopfs 3 angepaßt ist. Beide Gewinde haben die gleiche Steigung.

Wenn die Schraube 14 in die Dübelhülse eingeschraubt wird, so führt sie zunächst zu einem Einschrauben in den aufspreizbaren Bereich und zu dessen Erweiterung und damit Festlegung in dem Mauerwerk 1. Sobald das Gewinde 19 durch den Dübelkopf 3 hindurch die Dübelhülse 2 erreicht, bildet es dort ein Gewinde durch Verformen der Dübelhülse. Bei dem weiteren Einschrauben der Schraube wird dieses Gewinde in der Dübelhülse 2 weiter und stärker ausgebildet. Aufgrund des Gewindeeingriffs zwischen dem Gewinde 19 und dem in,der Dübelhülse 2 gebildeten Gewinde kann die Schraube 14 nicht weiter geschraubt werden als bis zu der Stelle, wo ihr Schraubenkopf 20 an dem Dübelkopf 3 zur Anlage gelangt. Es wird damit unmöglich, daß durch ein weiteres Schrauben der Schraube auf die Zarge 11 eine Kraft ausgeübt wird, die zu einer Verspannung der Zarge 11 führt. Da beide Gewinde die gleiche Steigung aufweisen, wird auf den Rahmen auch während des Schraubens keine Spannung ausgeübt.

Das von der Spitze ausgehende erste Gewinde 16 ist im dargestellten Beispiel auf einen Schaft mit einem geringeren Durchmesser aufgewalzt als der Rest des Schafts 17. Das dem Schraubenkopf 20 zugeordnete Gewinde 19 weist einen größeren Durchmesser als das erste Gewinde 16 auf. Dies kann dazu benutzt werden, dafür zu sorgen, daß nur das Gewinde 19 in der Dübelhülse 2 ein Gewinde formt. Dies ist aber so nicht unbedingt erforderlich.

## Patentansprüche

1. Befestigungsanordnung für Fensterzargen oder dergleichen, mit
1.1 einem Dübel, der
1.1.1 eine Dübelhülse (2) und
1.1.2 einen sich daran anschließenden aufspreizbaren Bereich auf weist, sowie mit
1.2 einer Dübelschraube (14), die
1.2.1 einen Schraubenkopf (20),
1.2.2 einen Schraubenschaft (17) und
1.2.3 eine Schraubenspitze (15) auf weist, die
1.2.4 mit einem Gewinde (16) zum Einschrauben in die Dübelhülse und zum Aufspreizen des Spreizbereichs versehen ist, wobei
1.3 an den Schraubenkopf (20) angrenzend eine Gewindeeinrichtung (19) vorgesehen ist, die
1.3.1 mit der Dübelhülse (2) zur Bildung eines Schraubeingriffs zwischen der Schraube (14) und dem Dübel zusammenwirkt, **dadurch gekennzeichnet, dass**
1.4 die Gewindeeinrichtung (19) der Schraube (14) in der Dübelhülse (2) beim Einschrauben ein Gewinde bildet, insbesondere formt und/oder schneidet, das
1.5 sich dabei nach außen durchformt.

2. Anordnung nach Anspruch 1, bei der die Dübelhülse (2) ein mit der Gewindeeinrichtung (19) der Schraube (14) zusammenwirkendes Gewinde auf weist.

3. Anordnung nach einem der vorhergehenden Ansprüche, bei der die Dübelhülse (2) einen Dübelkopf (3) zur Anlage an der dem Mauerwerk: (1) abgewandten Seite der Zarge (11) auf weist.

4. Anordnung nach einem der vorhergehenden Ansprüche, bei der der Schraubenkopf (20) radial über den Schaft (17) vorsteht.

5. Anordnung nach einem der vorhergehenden Ansprüche, bei der der Dübel insbesondere einstückig aus Kunststoff besteht.

6. Anordnung nach einem der vorhergehenden Ansprüche, bei der zwischen den beiden Gewinden (16, 19) ein gewindefreier Abschnitt (18) am Schaft vorgesehen ist.

7. Verwendung einer Befestigungsanordnung nach einem der vorhergehenden Ansprüche zur Befestigung von Fensterzargen oder dergleichen mit Abstand vor dem Mauerwerk (1).

## Claims

1. Fastening arrangement for window frames or the like with
1.1 a pin having
1.1.1 a pin sleeve (2) and
1.1.2 a subsequent spreadable area, and with
1.2 a pin screw (14) having
1.2.1 a screw head (20)
1.2.2 a screw shaft (17) and
1.2.3 a screw tip (15), that
1.2.4 is providing with a thread (16) for insertion into the pin sleeve and for spreading the spreading area, whereby
1.3 a threading device (19) is provided that neighbors the screw head (20), and the threading device
1.3.1 interacts with the pin sleeve (2) to form a screw grip between the screw (14) and the pin, **characterized in that**
1.4 the threading device (19) of the screw (14) especially forms and/or cuts a thread in the pin sleeve (2) when screwing in, and the threading
1.5 is formed in an outward direction.

2. Arrangement according to Claim 1, whereby the pin sleeve (2) has a thread which interacts with the threading device (19) of the screw (14).

3. Arrangement according to one of the prior Claims, whereby the pin sleeve (2) has a pin head (3) to rest on the side of the frame (11) facing away from the masonry (1).

4. Arrangement according to one of the prior Claims, whereby the screw head (20) projects radially beyond the shaft (17).

5. Arrangement according to one of the prior Claims, whereby the pin is especially a single piece made of plastic.

6. Arrangement according to one of the prior Claims, whereby there is a thread-free section (18) on the shaft between the two threads (16, 19).

7. Use of a fastening arrangement according to one of the prior Claims to mount window frames or the like at a space from the masonry (1).

## Revendications

1. Dispositif de fixation pour dormants de fenêtres ou similaires, comprenant
1.1 une cheville qui présente
1.1.1 une douille pour cheville (2) et
1.1.2 une partie écartable se raccordant à la douille pour cheville, ainsi qu'
1.2 une vis (14) pour cheville qui présente
1.2.1 une tête de vis (20),
1.2.2 une tige de vis (17) et
1.2.3 une pointe de vis (15) qui est pourvue
1.2.4 d'un filetage (16) pour le vissage dans la douille pour cheville et pour l'écartement dans la zone d'écartement,
1.3 un dispositif de filetage (19) étant prévu de manière adjacente à la tête de vis (20), ce dispositif de filetage
1.3.1 agissant avec la douille pour cheville (2) pour former une prise de vis entre la vis (14) et la cheville,
**caractérisé en ce que**
1.4 le dispositif de filetage (19) de la vis (14) forme, en particulier façonne et/ou filète, un filetage dans la douille pour cheville (2) lors du vissage, ce filetage
1.5 se cambrant en même temps vers l'extérieur.

2. Dispositif selon la revendication 1, dans lequel la douille pour cheville (2) présente un filetage agissant avec le dispositif de filetage (19) de la vis (14).

3. Dispositif selon l'une quelconque des revendications précédentes, dans lequel la douille pour cheville (2) présente une tête de cheville (3) destinée à être appliquée sur le côté du dormant (11) détourné du mur (1).

4. Dispositif selon l'une quelconque des revendications précédentes, dans lequel la tête de vis (20) dépasse de la tige (17) en direction radiale.

5. Dispositif selon l'une quelconque des revendications précédentes, dans lequel la cheville est constituée de matière synthétique, en particulier d'une seule pièce.

6. Dispositif selon l'une quelconque des revendications précédentes, dans lequel une section sans filetage (18) est prévue sur la tige entre les deux filetages (16, 19).

7. Utilisation d'un dispositif de fixation selon l'une quelconque des revendications précédentes pour la fixation de dormants de fenêtres ou similaires avec espacement devant le mur (1).
